# EUROPEAN PATENT SPECIFICATION

(11) **EP 1 123 198 B1**
(45) Date of publication and mention of the grant of the patent: **09.04.2003**
(21) Application number: 98955096.7
(22) Date of filing: 20.10.1998
(51) Int. Cl.: B29D 30/48

(54) **STRESS NEUTRALIZATION OF AN APEX FILLER FOR A TIRE BEAD SUBASSEMBLY**
SPANNUNGSREDUZIERUNG IN EINEM WULSTFÜLLER FÜR EINEN REIFENWULSTAUFBAU
NEUTRALISATION DES CONTRAINTES EXERCEES SUR UN BOURRAGE SUR TRINGLE POUR SOUS-ENSEMBLE DE TALON DE PNEUMATIQUE

(43) Date of publication of application: 16.08.2001
(73) Proprietor: THE GOODYEAR TIRE & RUBBER COMPANY, Akron, Ohio 44316-0001 (US)
(72) Inventor: KUBINSKI, Donald, Chester, Medina, OH 44256 (US); SMITH, Michael, Wallace, Mogodore, OH 44260 (US)
(74) Representative: Leitz, Paul
(86) International application number: US9822547
(87) International publication number: WO00023262

(56) References cited:
- DE-A- 2 803 460
- DE-A- 3 108 142
- GB-A- 314 600
- US-A- 2 450 324
- US-A- 2 459 721

## Description

### TECHNICAL FIELD

This invention relates to the method of producing a pneumatic tire having an apex filler, the method and apparatus for producing a bead and apex filler subassembly, and the tire produced using the bead/apex filler subassembly for use in a pneumatic tire. More particularly, the apex filler is produced from an extruded strip of elastomeric material, which is then reformed after extrusion so as to reduce the stress build-up in the apex filler caused by wrapping the filler around an annular bead.

### BACKGROUND OF THE INVENTION

A pneumatic tire is composed of a tread, a belt structure, and a carcass comprising one or more plies of fabric cords coated with an elastomer. The tire contains axially spaced beads which define the innermost diameter of the tire, each bead comprising a metallic, annular ring, coated with an elastomer, adapted to contact and engage one rim of a wheel. Each bead may be combined with other elements such as flippers, chippers, apex fillers, toe guards and chaffers, all of which serve specific functions in the construction and/or the performance of the tire. This combination of the annular bead and the apex filler serves the purpose of providing a smooth transition between the bead and the adjacent sidewall of the tire. Often, the bead and apex filler are formed as a subassembly around which the carcass ply or plies are wrapped.

One prior art method of fabricating the combined bead and apex filler subassembly involves applying a flat strip of an elastomer along the inner circumference of the bead, and then encapsulating the bead by wrapping the elastomer strip around the bead. The portion of the elastomer strip which extends radially outwardly from the bead serves as the apex filler. This procedure has inherent difficulties, particularly in splicing the abutting ends of the wrapped strip. When the elastomer strip is wrapped around the bead, the outer circumference of the elastomer strip must be stretched to accommodate the difference in the circumferential dimension of the inner periphery of the strip, which is disposed about and abutted against the bead, and the outer periphery of the strip. This stretching induces stresses which can produce warping of the radial outer portion of the apex filler due to the elastic memory of the filler. The degree of warping from one apex filler to the next is not easily controllable, and this factor adversely impacts the consistency of the tire building operation and the uniformity of the resultant tires.

Another method for making the bead/filler sub-assembly is to apply the apex filler to a rotating bead for approximately one revolution after which the apex filler is cut and the two ends are gripped and stretched to splice them together. In like manner as before, this stretching causes the radially outermost edge of the filler to be elongated more than the inner portion, thus leading to warpage and/or cupping of the filler with the outer edge curling radially inwardly and axially away from the bead.

Yet another method is described in U.S. Patent No. 5,203,938. This patent describes the use of a chuck assembly with a pair of powered, adjustable rollers which engage the two sides of an elastomeric filler as it exits an extruder. The rollers serve to apply a variable speed to the filler, with a first, slower speed being applied to the base of the filler, and a second, faster speed applied to the top as the strip is rotated into an annular shape corresponding to the outer periphery of the bead. The differential speed serves to minimize distortion of the filler. The operation can be used to apply the apex filler directly to a bead positioned in a chuck.

Another procedure is to lay up the tire carcass plies on a tire building mandrel, set the annular beads at the shoulders on either side of the mandrel, place an extruded apex filler around the mandrel at each side thereof, and wrap the ends of the green carcass plies around the beads and the fillers. The sidewall, tread and breakers are wrapped around the green carcass after which the green carcass is placed in a mold and is formed under heat and pressure into a toroidal shape and is cured. In the shaping and curing process, the apex fillers are rotated 90° from a flat position on the mandrel to a vertical, radial position. This method of tire construction can cause air to become trapped between the apex filler, the bead, the carcass plies and the turn-up, thereby leading to the formation of blisters in the tire sidewall and the premature failure of the tire. Furthermore, the turning of the apex filler around the curved sidewall of the tire causes the base of the filler to push compressively against the bead and the top of the apex filler to stretch to a larger diameter, thereby causing it to be in tension which leads to possible distortion and irregularities in the tire construction previously described.

DE-A- 28 03 460 discloses the extrusion of a rubber apex strip and its application on a bead core.

### OBJECTS AND SUMMARY OF THE INVENTION

It is an object of the present invention to permit the pre-assembly of a bead and an apex filler, with the apex filler in a stress neutralized state.

Another object of the present invention is to construct a subassembly of a bead and an apex filler wherein the apex filler is initially prestressed on a mandrel as it leaves the extruder and after which the stresses within the apex filler are at least partially neutralized as the filler is placed around the outer periphery of the bead.

In accordance with the present invention there is provided a method of producing an apex filler and an apparatus for use in relieving stresses in a triangular elastomeric extrusion for use as an apex filler, as defined in the claims.

### BRIEF DESCRIPTION OF THE DRAWINGS

Reference will be made in detail to preferred embodiments of the invention, examples of which are illustrated in the accompanying drawings. The drawings are intended to be illustrative, not limiting.

Certain elements in selected ones of the drawings may be illustrated not-to-scale, for illustrative clarity.

The cross-sectional views presented herein may be in the form of "slices", or "near-sighted" cross-sectional views, omitting certain background lines which would otherwise be visible in a true cross-sectional view, for illustrative clarity.
Figure 1 is a perspective view of a first embodiment of an extruder and a rotating mandrel showing an elastomeric extrusion being coiled around the mandrel in a helical former in accordance with the present invention;
Figure 2 is a perspective view of a second embodiment of an extruder and the mandrel with the elastomeric extrusion being coiled therearound in a variation of the helical former from that shown in Figure 1;
Figure 3 is an enlarged view, partially in cross-section, of the helical former of the second embodiment shown in Figure 2;
Figure 4 is a cross-sectional view of the helical former shown in the first embodiment of Figure 1;
Figure 5 is a cross-sectional view of the helical former of the second embodiment shown in Figure 2;
Figure 6 is a perspective view of a strip of apex filler;
**Figure 7** is a cross sectional view of the bead/apex filler subassembly; and
**Figure 8** is a cross-sectional view of a pneumatic tire incorporating the bead/apex filler subassembly constructed in accordance with the principles set forth in the present invention.

### DEFINITIONS

"Apex filler" means a generally triangular-shaped elastomeric filler which cooperates with a bead to ensure a smooth transition between the bead and the sidewall portion of a tire.

"Axial" and "axially" means the lines or directions that are parallel to the axis of rotation of a tire.

"Bead" means the part of the tire comprising an annular tensile member associated with holding the tire on the wheel rim.

"Carcass" means the tire apart from the tread and belts, and including the beads.

"Reinforcing belt" means at least two plies of parallel cords underlying the tread having cord angles which are nearly parallel with respect to the equatorial plane of the tire.

"Sidewall" means the portion of the tire between the tread and the bead.

"Tread" means the portion of the tire radially outside of the carcass in rolling contact with the surface of a road.

### DETAILED DESCRIPTION OF THE INVENTION

### FIRST EMBODIMENT

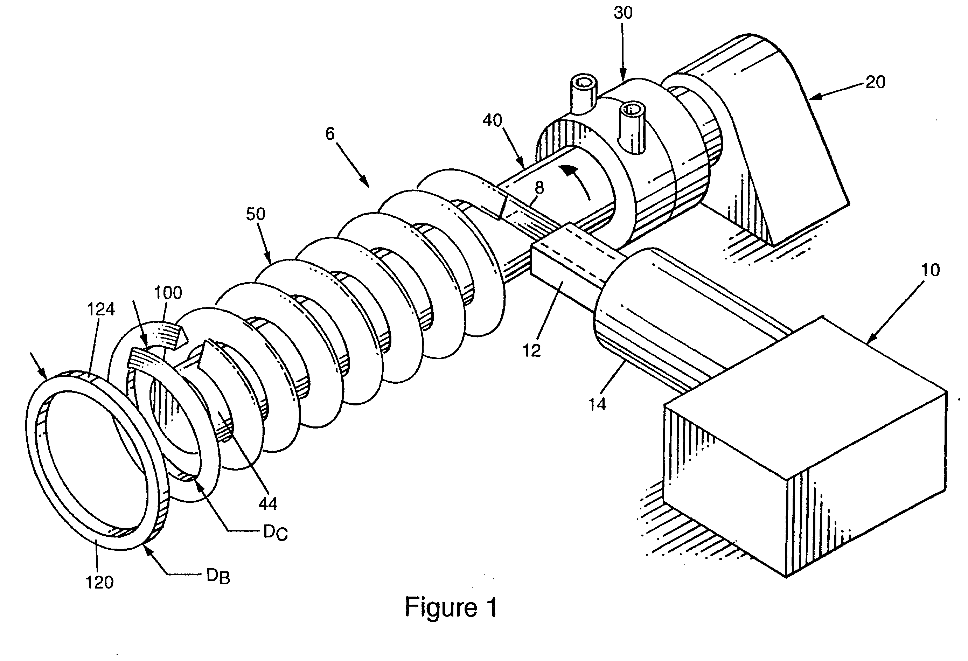

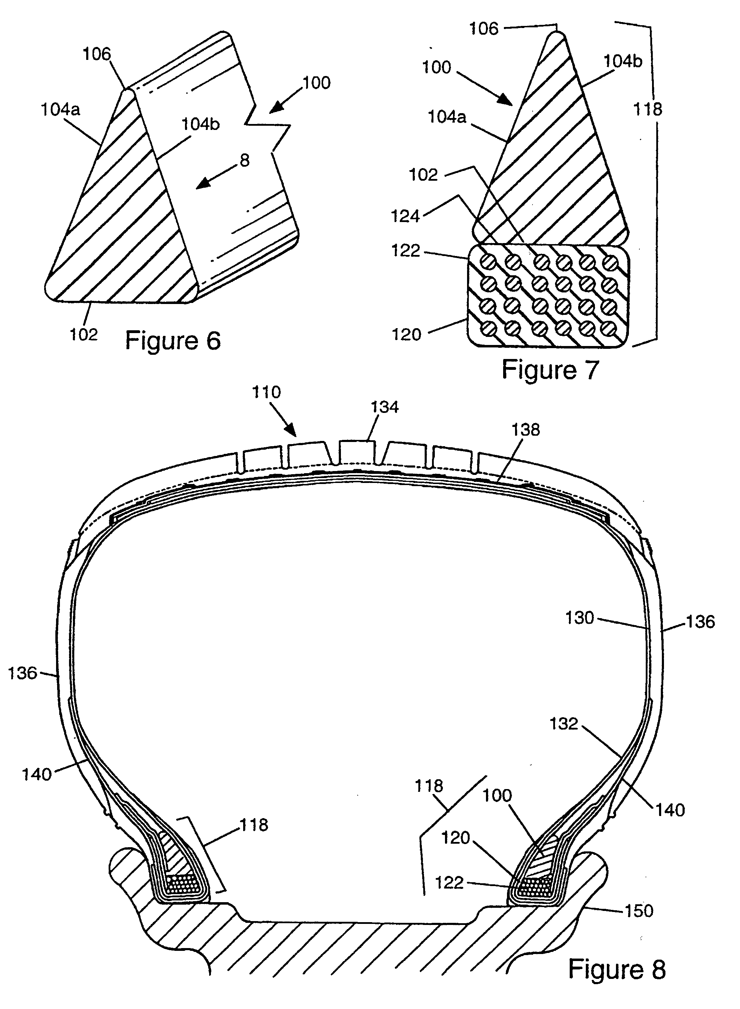

Referring now to the drawings, **Figure 1** shows a first embodiment of a coiling apparatus **6** useful for stress neutralization of a strip **8** of an elastomeric extrusion as it leaves the die **12** of an extruder **10.** The extruder **10** is of conventional design comprising an extrusion die **12** and extrusion barrel **14**, and is typically used to produce continuous elastomer strips of pre-determined cross-section. These strips are cut to length and are used for treads, sidewall inserts, apex fillers, shoulder fillers and the like in the construction of the pneumatic tire. The apex filler **100**, as shown in **Figure 6**, is generally formed as a strip **8** with a triangular cross-sectional shape. Preferably, the triangular cross-sectional shape of the apex filler **100** is that of an isosceles triangle, having a base **102** corresponding in width to the axial width of the outer periphery of a bead and two sides **104a, 104b** of equal length which converge to form the peak **106** of the triangle. The length of the sides **104a, 104b** typically are about 2 to 4 times the width of the base **102.**

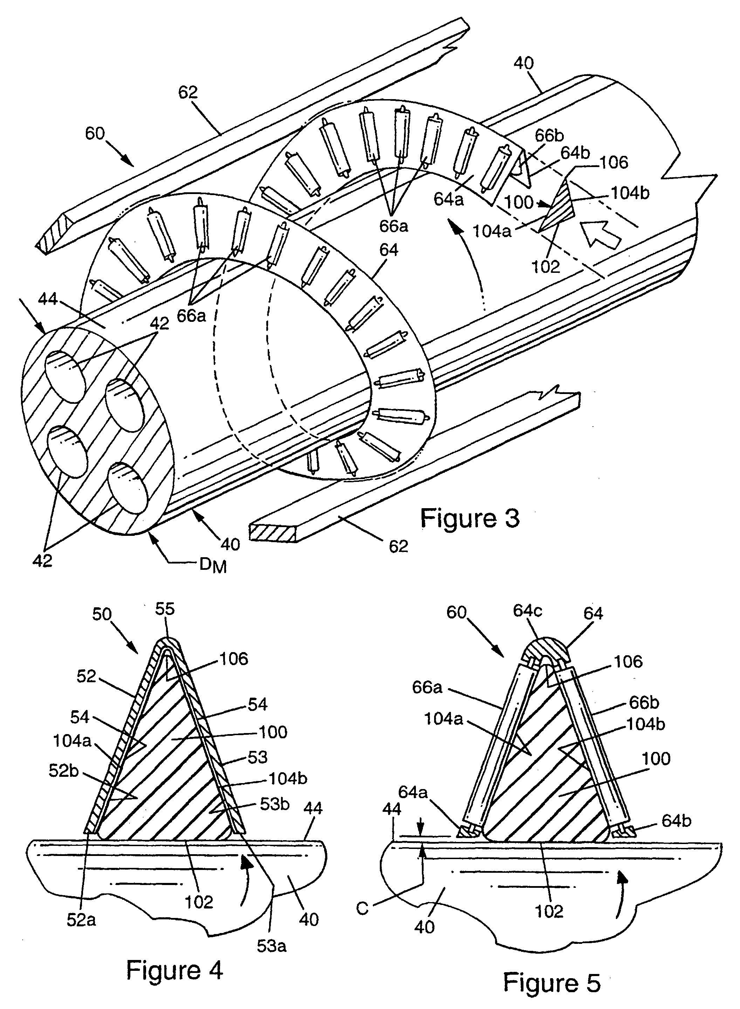

The extruded strip **8** is transferred immediately from the extruder **10** to a rotating, temperature regulated mandrel **40** cantilevered from and driven by a motor **20**. At this stage, the extruded strip **8** is coiled into the shape of an apex filler **100**. The temperature regulator operates typically with a coolant such as water and/or air that both enter the mandrel **40** through a fixed manifold **30** and is circulated through passages **42** (shown in **Figure 3**) that extend the length of the mandrel. Further, an air coolant is blown across the surface of the mandrel. Typically, the cooling water flows up and down the mandrel through passages **42**. The mandrel **40** is driven at a rotational speed corresponding to the linear speed of the extruder **10**. The surface **44** of the mandrel **40** is provided with a smooth finish to permit the elastomeric extrusion **8** to slide along the surface in the axial direction of the axis **68** extending through the mandrel as the mandrel is rotated.

Radially surrounding the cooling mandrel **40** is a stationary, helical-shaped, apex former **50**, as shown in **Figure 1**, which has an inner profile conforming to the cross-sectional shape of the extrusion **8.** As seen in more detail in **Figure 4,** the apex former **50** has sidewalls **52,53**, which converge and meet at peak **55** to form the shape of an axially inverted V disposed with free ends **52a,53a** adjacent surface **44** of mandrel **40**. The inner surface formed by inner surface **52b,53b** of sidewalls **52,53,** respectively, and surface **44** of mandrel **40** forms an opening **54** corresponding to the cross sectional shape and size of the apex filler **100.** The inside surface of sidewalls **52,53** of the apex former **50** preferably is coated or lined with a nonstick layer of material such as Teflon or silicone which permits the extrusion **8** to be continuously fed through the apex former as the extrusion is deposited from the extruder **10** onto the surface **44** of the rotating mandrel **40**.

The outer diameter D_{M} of the mandrel **40** is between about 50% and about 75%, preferably between about 50% and about 60% of the diameter D_{B} of the outer peripheral surface **124** of the bead **120** on which the apex filler **100** is to be wrapped. As the extrusion **8** is wrapped around the mandrel **40**, it is converted from linear movement from die **12** to apex former **50** to helical movement on the pathway provided by surface **44** of mandrel **40** through opening **54** of apex former **50** corresponding to the profile of apex filler **100,** i.e. with a triangular cross-sectional shape with a base **102** and a pair of sidewalls **104a,104b** converging at a peak **106.** That is, the elastomeric strip **8** is coiled into a spiral shaped coil having a triangular cross-sectional shape with an inner diameter (D_{c}) being smaller than the outer diameter D_{B} of the annular bead **120** whereby the base of the extrusion **8** is compressed and the peak of the extrusion is stretched. The resulting relatively circular movement subjects the base of the extrusion to compressive stress and the peak of the extrusion to tensile stress. As the extrusion **8** progresses along the helical path against the cooled mandrel **40**, the extrusion is gradually cooled from the extrusion temperature of approximately 110° C to about 120 °C at which it is tacky and unable to maintain its own shape, to a lower temperature of approximately 32.2° C to about 35°C at which it retains its cross-sectional shape and coiled diameter. As the coiled apex filler **100** leaves the mandrel **40**, it starts to uncoil or unwind so that the diameter of the apex filler increases to at least partially relieve compressive and tensile stresses in the extrusion. The apex filler **100** is wrapped around the outer peripheral surface **124** of annular bead **120** to form the apex filler/annular bead subassembly **118** shown in **Figure 7**. The apex filler **100** is cut to length and the two ends thereof are abutted and stitched together on the annular bead **120** (not shown).

### SECOND EMBODIMENT

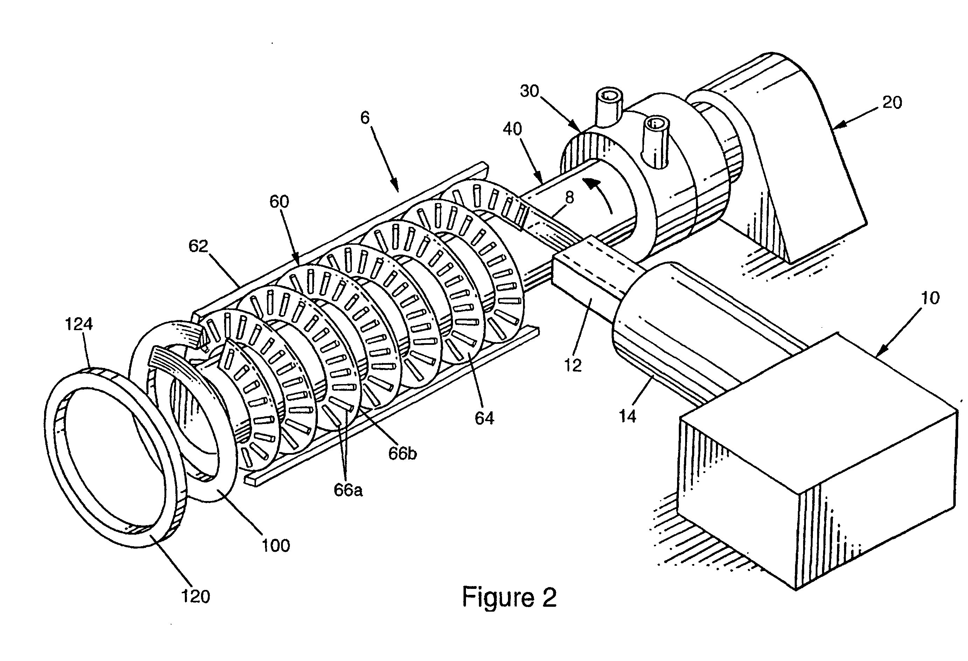

**Figures 2, 3,** and **5** show an alternative embodiment of a coiling apparatus for maintaining the shape of the extrusion **8** as it is coiled around rotating mandrel **40**. Instead of using an inverted helical-shaped apex former **50** to maintain the shape of the extrusion **8** as it is coiled, a plurality of pairs of spaced rollers **66a, 66b** are provided along the helical path through which the extrusion moves. As in the first embodiment, coiling apparatus **6** comprises a manifold **30** and a cooling mandrel **40** rotatably driven by motor **20.** An extruder **10** feeds a continuous elastomeric strip **8** to the mandrel **40** where it is fed between two rows of closely spaced rollers **66a, 66b** forming the converging sides of the apex former **60.** The strip **8** is carried along the rotating mandrel **40** and is supported by the rollers **66a, 66b** as it is formed into the coiled shape of the apex filler **100.** The apex filler **100** is substantially identical to that formed with the first embodiment and includes a base **102** and a pair of sides **104a, 104b** converging from the base to a peak **106**. Each of the rollers **66a, 66b** is mounted in the helix-shaped support **64** of the apex former **60** which is secured to a stationary frame **62**. The helical-shaped support has two sidewalls **64a,64b** which meet at a peak **64c** and are disposed at an angle corresponding to the angle between sides **104a** and **104b** of apex filler **100.** The pairs of rollers **66a, 66b** are aligned in two rows, one in the sidewall **64a** and the other in sidewall **64b** of helical-shaped support **64** so that the rollers in one row are inclined toward the rollers in the other row to form the inverted V corresponding in shape and size to the cross-sectional shape of the extrusion 8. The stationary frame **62**, helix-shaped support **64,** and rollers **66a, 66b** extend along the longitudinal axis **68** through mandrel **40.** As with the inner surface of the sidewalls **52,53** of apex form **50** shown in **Figure 4**, rollers suitable for use in apex former **60** may be made from, or lined with a sleeve of a suitable nonstick material such as Teflon. Alternatively, polished stainless steel or other smooth surface metals may be used as the non-stick rollers. As the coiled extrusion **8** is removed from the mandrel **40,** the extrusion is transferred to an annular bead **120**, in the coiled state, where it is wrapped around the outer peripheral surface **124** thereof to form the annular bead/apex filler subassembly **118.** Then the extrusion is cut so that the two ends of the filler abut one another and stick because of their tackiness. The apex bead filler subassembly **118** is partially uncoiled as it is wrapped around the bead **120,** thereby helping to relieve the stresses within the filler.

The helix around the mandrel **40** has a pitch of between about 5 centimeters (cm) and about 10 cm, and preferably between about 5 cm and 6.5 cm. The clearance "c" as shown in **Figure 5,** between the mandrel **40** and helix form support **64** allows for free rotation of the mandrel and for passage of the extrusion **8** around the mandrel along the helical path. However, the clearance "c" is not great enough to permit any of the extrusion **8** to be squeezed through the clearance "c" between the form support **64** and the mandrel **40**. A radial clearance "c" of between about .3 cm and about .65 cm is acceptable.

A completed apex/bead filler subassembly is shown in **Figure 7.** The bead **120** typically comprises multiple strands of bead wire **122** composed of a single or monofilament steel wire coated with an elastomer and repeatedly wrapped to form the completed bead **120.** The coiled apex filler **100** may be wrapped around the bead **120** either by hand or by use of suitable equipment well known in the art such is that described in United States patent 5,203,938, previously discussed.

**Figure 8** is a simplified, cross-sectional view of the general configuration of a pneumatic tire of the kind that employs the bead/apex subassembly **118** of the present invention. The tire **110** comprises an elastomeric carcass **130** with a carcass ply **132** reinforced with cords of various materials known to those skilled in the art. The cords extend in a generally radial direction or in a biased direction to form a radial ply tire or a biased ply tire according to standard design parameters. The tire includes a tread **134**, a pair of sidewalls **136** and a reinforcing belt **138** reinforced with inextensible fibers or cords of fiberglass, steel, polyester or the like interposed between the carcass tire **130** and the tread **134**. The radially inwardly extending edge portions of the carcass ply **132** wrap around the bead **120** forming turn-ups **140** ending in the area of the tire sidewall **136.** Radially outward of each bead **120** and juxtaposed thereagainst is a bead apex filler assembly **118** constructed according to the teachings of the present invention. The tire **110** is mounted on a rim **150**, a portion of which is shown in outline.

Although the invention has been described with particular reference to certain specific embodiments, it should be understood that other variations may be used without departing from the basic concept. For example different materials may be used in the construction of the cooling mandrel, the shaped stationary helix, or the rollers provided these components are capable of functioning in the same manner as those described herein. Any structural framework may be used for supporting either embodiment of the helix provided the framework is able to maintain radial spacing between the helix and the mandrel and is able to provide adequate support for the helix while several convolutions of the apex filler are passing therethrough. As the dimensions of the extruded apex filler are changed to accommodate beads of differing diameters, and tires having different specifications, it will become necessary to replace one helix former with another of different cross sectional profile and/or diameter, and to use a cooling mandrel having a diameter which fits the dimensional parameters as herein described. The mandrel may be cooled as described or may be heated for the purpose of achieving the results desired by the present invention.

While the invention has been described in combination with embodiments thereof, it is evident that many alternatives, modifications, and variations will be apparent to those skilled in the art in light of the foregoing teachings. Accordingly, the invention is intended to embrace all such alternatives, modifications and variations as fall within the scope of the appended claims.

## Claims

1. A method of producing an apex filler (100) comprising extruding an elastomeric compound through a die to form an extrusion (8) having a triangular cross-section with a base (100) and a pair of sides (104a, 104b) converging toward a peak (106), the method **characterized by** forming the extrusion into a spiral having an inner diameter (D_{c}) between 50% and 75% of the outer diameter (Dₐ) of an annular bead (120) to which a length of the. extrusion is to be attached whereby the base of the extrusion is subject to compression and the peak of the extrusion is subject to tension while maintaining the triangular cross-section of the extrusion.

2. The method of claim 1 including the step of forming the extrusion into a spiral by wrapping the extrusion around a rotating mandrel (40).

3. The method of claim 2 including the step of cooling and setting the shape of the extrusion on the rotating mandrel (40).

4. The method of claim 1 including the step of applying the extrusion (8) to the outer periphery (124) of the bead (120) to form the apex filler (100).

5. An apparatus for use in relieving stresses in a triangular elastomeric extrusion (8) for use as an apex filler (100) in a filler/bead subassembly (118) for a pneumatic tire (110), the apparatus **characterized by**:
- a rotating mandrel (40) having a diameter (Dₘ) of between 50% to 75% of the outer diameter (D_{B}) of an annular bead (120) to which the elastomeric extrusion is to be applied;
- a manifold (30) for controlling the temperature of the mandrel (40) to heat or to cool the extrusion (8) wrapped therearound; and
- an apex former (50) for transferring the extrusion spirally along the longitudinal axis of the rotating mandrel while maintaining the shape of the apex filler.

6. The apparatus according to claim 5, wherein the mandrel (40) is mounted in close proximity to a helical former (50, 60) that radially surrounds the mandrel to shape the extrusion as the mandrel rotates.

7. The apparatus according to claim 6 wherein the helical former (50, 60) has an open, axially inverted V-shaped form (52) having an opening corresponding to the cross sectional shape of the extrusion.

8. The apparatus according to claim 7 wherein the interior surface (54) of the helical former (50) is a low friction surface.

9. The apparatus according to claim 6 wherein the helical former (60) has a plurality of rollers (66a, 66b) extending in two rows along the helical path of the helical former.

10. The apparatus according to claim 9 wherein the plurality of rollers (66a,66b) are aligned in a transverse relationship with the plane of the axis (68) of the mandrel (40) with the rollers in one row inclined toward the rollers in the other row to form an inverted V corresponding in shape and size to the cross-sectional shape of the extrusion (8).

## Patentansprüche

1. Verfahren für die Herstellung einer Kernreiterfahne (100), bei dem eine elastomere Verbindung durch eine Düse stranggepresst wird, um ein Strangpressprodukt (8) mit dreieckigem Querschnitt zu bilden, der eine Basis (100) und ein Paar Seiten (104a, 104b), die zu einer Spitze (106) zusammenlaufen, besitzt, **dadurch gekennzeichnet, dass** das Strangpressprodukt in eine Schraubenlinie geformt wird, die einen Innendurchmesser (D_{C}) im Bereich von 50 % bis 75 % des Außendurchmessers (D_{B}) eines ringförmigen Wulstes (120) besitzt, wobei an dem ringförmigen Wulst (120) ein Teilstück des Strangpressprodukts befestigt werden soll, wobei die Basis des Strangpressprodukts einer Kompression und die Spitze des Strangpressprodukts einem Zug unterworfen werden und dabei der dreieckige Querschnitt des Strangpressprodukts aufrechterhalten wird.

2. Verfahren nach Anspruch 1, das den Schritt umfasst, bei dem das Strangpressprodukt in eine Schraubenlinie geformt wird, indem es um einen rotierenden Dom (40) gewickelt wird.

3. Verfahren nach Anspruch 2, das den Schritt umfasst, bei dem gekühlt wird und die Form des Strangpressprodukts auf dem rotierenden Dorn (40) fixiert wird.

4. Verfahren nach Anspruch 1, das den Schritt umfasst, bei dem das Strangpressprodukt (8) auf den äußeren Umfang (124) des Wulstes (120) aufgebracht wird, um die Kernreiterfahne (100) zu bilden.

5. Vorrichtung für die Verwendung bei der Entlastung von Beanspruchungen in einem dreieckigen elastomeren Strangpressprodukt (8), das als Kernreiterfahne (100) in einer Fahnen-/Wulst-Unterbaueinheit (118) für einen Luftreifen (110) verwendet wird, wobei die Vorrichtung **gekennzeichnet ist durch**:
- einen rotierenden Dorn (40), der einen Durchmesser (Dₘ) im Bereich von 50 % bis 75 % des Außendurchmessers (D_{B}) eines ringförmigen Wulstes (120), auf den das elastomere Strangpressprodukt aufgebracht werden soll, besitzt;
- einen Verteiler (30) zum Steuern der Temperatur des Dorns (40), um das um den Dorn (40) gewickelte Strangpressprodukt (8) zu erwärmen oder zu kühlen; und
- eine Kernreiter-Formungseinrichtung (50), die das Strangpressprodukt schraubenlinienförmig entlang der Längsachse des rotierenden Dorns transportiert und dabei die Form der Kernreiterfahne beibehält.

6. Vorrichtung nach Anspruch 5, bei der der Dorn (40) sehr nahe bei einer den Dorn radial umgebenden schraubenlinienförmigen Formungseinrichtung (50, 60) angebracht ist, um das Strangpressprodukt zu formen, wenn sich der Dorn dreht.

7. Vorrichtung nach Anspruch 6, bei der die schraubenlinienförmige Formungseinrichtung (50, 60) eine offene Form (52) in Gestalt eines axial umgedrehten V besitzt, dessen Öffnung der Querschnittsform des Strangpressprodukts entspricht.

8. Vorrichtung nach Anspruch 7, bei der die innere Oberfläche (54) der schraubenlinienförmigen Formungseinrichtung (50) eine Oberfläche mit niedriger Reibung ist.

9. Vorrichtung nach Anspruch 6, bei der die schraubenlinienförmige Formungseinrichtung (60) mehrere Rollen (66a, 66b) aufweist, die in zwei Reihen längs des schraubenlinienförmigen Weges der schraubenlinienförmigen Formungseinrichtung verlaufen.

10. Vorrichtung nach Anspruch 9, bei der die mehreren Rollen (66a, 66b) in Querrichtung auf die Ebene der Achse (68) des Dorns (40) ausgerichtet sind, wobei die in einer Reihe befindlichen Rollen zu den in der anderen Reihe befindlichen Rollen geneigt sind, um ein umgedrehtes V zu bilden, das hinsichtlich Form und Größe der Querschnittsform des Strangpressprodukts (8) entspricht.

## Revendications

1. Procédé pour la production d'un bourrage sur tringle (100) comprenant le fait d'extruder un composé élastomère à travers une extrudeuse pour obtenir un extrudat (8) possédant une section transversale triangulaire avec une base (100) et une paire de côtés (104a, 104b) convergeant en direction d'un sommet (106), le procédé étant **caractérisé par** le fait de conférer à l'extrudat une forme en spirale dont le diamètre interne (Dc) représente entre 50 % et 75 % du diamètre externe (Da) d'un talon annulaire (120) auquel doit venir se fixer une longueur de l'extrudat, la base de l'extrudat étant soumise à une compression et le sommet de l'extrudat étant soumis à une tension, tout en maintenant la section transversale triangulaire de l'extrudat.

2. Procédé selon la revendication 1, englobant l'étape consistant à conférer à l'extrudat une forme en spirale en entourant un mandrin rotatif (40) avec l'extrudat.

3. Procédé selon la revendication 2, englobant l'étape consistant à refroidir et à fixer la configuration de l'extrudat sur le mandrin rotatif (40).

4. Procédé selon la revendication 1, englobant les étapes consistant à appliquer l'extrudat (8) sur la périphérie externe (124) du talon (120) dans le but de former le bourrage sur tringle (100).

5. Appareil à utiliser pour le soulagement des contraintes dans un extrudat élastomère (8) de forme triangulaire à utiliser comme bourrage sur tringle (100) dans un sous-assemblage de bourrage sur tringle/talon (118) pour un bandage pneumatique (110), l'appareil étant **caractérisé par** :
- un mandrin rotatif (40) dont le diamètre interne (Dc) représente entre 50 % et 75 % du diamètre externe (Da) d'un talon annulaire (120) auquel doit venir se fixer une longueur de l'extrudat,
- un collecteur (30) pour régler la température du mandrin (40) dans le but de chauffer ou de refroidir l'extrudat (8) entourant ledit mandrin ; et
- un dispositif de formation de bourrage sur tringle (50) destiné à transférer l'extrudat en spirale le long de l'axe longitudinal du mandrin rotatif tout en maintenant la configuration du bourrage sur tringle.

6. Appareil selon la revendication 5, dans lequel le mandrin (40) est monté à proximité étroite d'un dispositif de formation de forme hélicoïdale (50, 60) qui entoure le mandrin en position radiale dans le but de façonner l'extrudat au fur et à mesure de la rotation du mandrin.

7. Appareil selon la revendication 6, dans lequel le dispositif de formation de forme hélicoïdale (50, 60) possèdent une forme ouverte en V inversé en direction axiale (52) dont l'ouverture correspond à la forme de l'extrudat en section transversale.

8. Appareil selon la revendication 7, dans lequel la surface interne (54) du dispositif de formation hélicoïdal (50) est une surface à faible coefficient de friction.

9. Appareil selon la revendication 6, dans lequel le dispositif de formation hélicoïdal (60) possède plusieurs galets (66a, 66b) s'étendant en deux rangées le long de la voie hélicoïdale du dispositif de formation hélicoïdal.

10. Appareil selon la revendication 9, dans lequel lesdits plusieurs galets (66a, 66b) sont alignés en relation transversale avec le plan de l'axe (68) du mandrin (40), les galets dans une rangée étant inclinés en direction des galets dans l'autre rangée dans le but de former un V inversé correspondant, en ce qui concerne sa forme et sa dimension, à la configuration de l'extrudat (8) en section transversale.
